# FASCICULE DE BREVET EUROPEEN

(11) **EP 3 658 400 B1**
(45) Date de publication et mention de la délivrance du brevet: **07.04.2021**
(21) Numéro de dépôt: 18752598.5
(22) Date de dépôt: 20.07.2018
(51) Int. Cl.: B60K 17/354, B60K 23/08

(54) **PROCÉDÉ DE PILOTAGE AMÉLIORÉ POUR ASSISTANCE HYDRAULIQUE**
VERBESSERTES STEUERUNGSVERFAHREN FÜR HYDRAULISCHE UNTERSTÜTZUNG
IMPROVED CONTROL METHOD FOR HYDRAULIC ASSISTANCE

(30) Priorité: 24.07.2017 FR 1757014
(43) Date de publication de la demande: 03.06.2020
(73) Titulaire: Poclain Hydraulics Industrie, 60410 Verberie (FR)
(72) Inventeur: DIDIERJEAN, Claude, 60410 Verberie (FR)
(74) Mandataire: Cabinet Beau de Loménie
(86) Numéro de dépôt international: PCT/FR2018/051863
(87) Numéro de publication internationale: WO 2019/020912

(56) Documents cités:
- FR-A1- 2 927 040
- FR-A1- 3 043 372

## Description

### DOMAINE DE L'INVENTION

Le présent exposé concerne les systèmes d'assistance hydraulique pour véhicule, et plus précisément le pilotage d'un tel système.

### ETAT DE LA TECHNIQUE ANTERIEURE

On connaît, l'avantage d'une transmission hydraulique, qui permet de délivrer un fort couple, à des vitesses modérées.

La transmission hydraulique est typiquement utilisée comme une transmission d'assistance, associée à une transmission mécanique principale. Par exemple, le brevet européen EP 0 993 982 divulgue l'utilisation combinée d'une transmission hydraulique et d'une transmission mécanique. Dans ce cas, la transmission hydraulique est utilisée dans des conditions particulières, en particulier pour réaliser une assistance de la transmission mécanique dans des conditions de circulation qui le nécessitent, par exemple en cas de perte d'adhérence d'au moins l'une des roues du véhicule lorsqu'il circule sur un terrain glissant tel que celui d'un chantier de construction. Le document FR 3043372 présente un exemple de transmission hydraulique d'assistance.

Qu'elle soit la transmission principale ou une transmission d'assistance, la transmission hydraulique peut être utilisée dans des conditions de circulation difficiles. Dans certains cas, elle doit être utilisée à très basse vitesse, par exemple lorsque le véhicule circule sur un terrain particulièrement glissant ou accidenté, notamment pour franchir un obstacle tel qu'un dos d'âne ou une bordure de trottoir, ou bien pour sortir d'une ornière, notamment dans la boue. Dans une telle situation, la transmission hydraulique doit délivrer un couple significatif et entrainer les roues à une vitesse très faible, mais suffisante pour permettre au véhicule de circuler et, le cas échéant, de passer l'obstacle.

De manière conventionnelle, du fait de la nature de la transmission hydraulique d'assistance, cette dernière est désengagée dès lors que l'utilisateur actionne une commande de frein du véhicule.

Le présent exposé vise à proposer de tirer avantage d'une transmission hydraulique d'assistance hydraulique dans des conditions non envisagées par les systèmes actuels.

### PRESENTATION DE L'INVENTION

A cet effet, le présent exposé concerne un procédé de commande d'un véhicule comprenant une transmission principale configurée pour entrainer en rotation un premier ensemble de roues, et une transmission hydraulique configurée pour entrainer en rotation un second ensemble de roues, le véhicule étant muni d'un frein, dans lequel
- en l'absence de consigne de freinage sur le frein, et lorsque la transmission hydraulique est activée, on pilote une pompe hydraulique de la transmission hydraulique de manière à établir une pression prédéterminée au sein d'un circuit hydraulique de la transmission hydraulique,
- en cas de consigne de freinage appliquée sur le frein, la transmission hydraulique est alors pilotée en fonction d'une consigne d'accélération appliquée au véhicule;
   si la consigne d'accélération est supérieure ou égale à une valeur seuil d'accélération, et que la vitesse de déplacement du véhicule est inférieure ou égale à une valeur seuil de vitesse, la transmission hydraulique est pilotée de manière à exercer un effort de traction,
   si la consigne d'accélération est inférieure à la première valeur seuil, la transmission hydraulique est désengagée.

Dans le présent exposé, on désignera par « frein » un système permettant de maintenir un véhicule immobile avant le démarrage du véhicule, par exemple en situation de démarrage dans une pente. De tels freins sont communément désignés sous l'appellation de « frein de parking » ou de « frein de service », étant entendu que d'autres systèmes de freinage peuvent réaliser une telle fonction.

Selon un exemple, la transmission hydraulique est désengagée lorsque la vitesse du véhicule dépasse une valeur seuil de vitesse.

Selon un exemple, en cas de consigne de freinage appliquée sur le frein, la transmission hydraulique est également pilotée en fonction d'une indication de l'inclinaison du véhicule.

Le pilotage de la transmission hydraulique de manière à exercer un effort de traction est alors typiquement modulé en fonction de l'inclinaison du véhicule.

Selon un exemple, en cas de consigne de freinage appliquée sur le frein, la transmission hydraulique est également pilotée en fonction d'une indication de charge du véhicule.

Le pilotage de la transmission hydraulique de manière à exercer un effort de traction est alors typiquement modulé en fonction de la charge du véhicule.

Le présent exposé concerne également un véhicule comprenant un dispositif de transmission configuré pour être commandé selon le procédé tel que défini précédemment.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente schématiquement un véhicule muni d'une assistance hydraulique sur un essieu,
- la figure 2 schématise le fonctionnement d'une assistance hydraulique pilotée via un procédé de pilotage selon l'invention.

Sur l'ensemble des figures, les éléments en commun sont repérés par des références numériques identiques.

### DESCRIPTION DETAILLEE D'EXEMPLES DE REALISATION

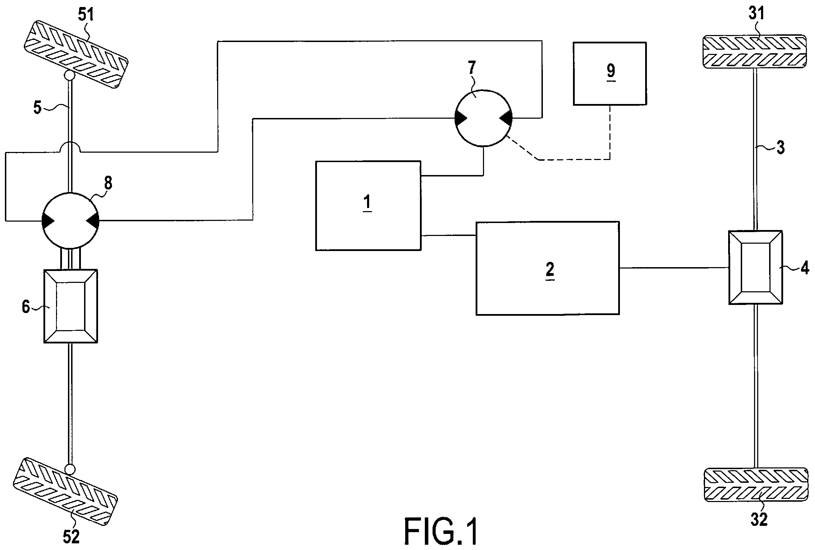

La figure 1 représente schématiquement un véhicule muni d'une assistance hydraulique sur un essieu.

On représente sur cette figure un moteur 1 formant un entraînement pour un premier essieu 3 muni de roues 31 et 32, ici représenté équipé d'un premier différentiel 4. Le moteur 1 est typiquement un moteur thermique, relié au différentiel 4 via une boite de vitesse 2. L'essieu 3 est ainsi typiquement l'essieu que l'on qualifie de « principal » pour le véhicule. D'une manière plus générale, les roues 31 et 32 sont des roues motrices principales ou habituelles du véhicule.

Le véhicule est également équipé d'une transmission hydraulique d'assistance sur un second essieu 5 muni d'un second différentiel 6 et de deux roues 51 et 52, qui sont ici représentées comme étant des roues directrices (on comprendra que ce mode de réalisation est donné à titre d'exemple, et que la nature directrice ou non des roues de l'essieu entrainé par la transmission hydraulique d'assistance est sans impact sur l'invention). D'une manière plus générale, les roues 51 et 52 sont des roues porteuses habituelles du véhicule.

La transmission hydraulique d'assistance est ici représentée schématiquement comme comprenant une pompe hydraulique 7 et un moteur hydraulique 8.

Une transmission tout à fait équivalente peut être réalisée en associant un moteur hydraulique à chaque roue 51,52 le différentiel 6 pouvant alors être supprimé dans la mesure où les roues 51 et 52 ne sont alors pas liées en rotation ce qui procure un effet différentiel. Dans ce cas les moteurs associés aux deux roues 51 et 52 sont branchés hydrauliquement en parallèle à l'admission et au refoulement de la pompe 7.

Qu'il s'agisse du montage avec différentiel ou non, le moteur 8 peut tourner à la vitesse des roues, ou un rapport de démultiplication ou de multiplication peut exister entre le moteur 8 et les roues 51,52.

La pompe hydraulique 7 est couplée au moteur 1 qui permet ainsi d'en assurer l'entrainement. La pompe hydraulique 7 délivre ainsi un débit au moteur hydraulique 8, de manière à ce que ce dernier applique un couple moteur sur le second essieu 5.

le moteur hydraulique 8 est typiquement un appareil hydraulique de type à pistons radiaux et à cylindrée fixe. La pompe hydraulique 7 est typiquement un appareil hydraulique du type à pistons axiaux, et à cylindrée variable, pouvant alterner entre une configuration de roue libre dans laquelle ils présentent une cylindrée nulle (par exemple par rétractation de pistons dans leurs logements respectifs, ou par désengagement du bloc cylindres pour les machines à pistons radiaux, ou par mise en position a cylindrée nulle du plateau d'une machine à pistons axiaux), et une configuration de service (dans laquelle la cylindrée est non nulle). On comprendra que le fonctionnement demeure inchangé dans une configuration où la pompe hydraulique 7 entraine plusieurs moteurs hydrauliques. Plus généralement, le présent exposé s'applique pour une pompe hydraulique 7 associée à n moteurs hydrauliques, avec n entier naturel non nul.

En fonctionnement, c'est le moteur 1 qui assure l'entrainement « principal » du véhicule. La transmission hydraulique d'assistance est typiquement engagée dans des conditions particulières, par exemple en cas de perte d'adhérence ou pour le franchissement d'obstacles, et plus particulièrement dans des conditions de déplacement du véhicule à une vitesse faible.

Lorsque la transmission hydraulique d'assistance est mise en service, un contrôleur 9 pilote la cylindrée de la pompe hydraulique 7 de manière à ce qu'elle délivre un débit en fonction de la vitesse de rotation du premier essieu 3. Ce débit est typiquement calculé de manière à ce que la vitesse de rotation des roues du second essieu 5 soit égale ou sensiblement supérieure à la vitesse de rotation des roues du premier essieu 3, de manière à réaliser une assistance au déplacement, et ne pas freiner le déplacement du véhicule.

La cylindrée de la pompe hydraulique 7 est ainsi déterminée pour être égale à une valeur cible, typiquement fixe, pour chaque rapport de la boite de vitesse 2 qui est engagé. Plus précisément, en fonction de la vitesse des roues (ou de la valeur d'un paramètre qui y est lié), et de la vitesse de rotation de la pompe hydraulique 7 (ou de la valeur d'un paramètre qui y est lié, par exemple la vitesse de rotation du moteur 1), on détermine la valeur de cylindrée théorique correspondant au débit souhaité afin d'entraîner les roues 51 et 52 à la vitesse de rotation souhaitée. En considérant un véhicule se déplaçant dans des conditions prédéterminées et constantes, la valeur de cylindrée ainsi déterminée est donc constante. La pression d'assistance est alors typiquement égale à 80 bar ou plus, en fonction du mode de traction souhaité. On comprend cependant qu'en fonctionnement dans des conditions réelles, la valeur cible de pression et de cylindrée va évoluer en fonction du temps, en fonction de la vitesse de rotation des roues de l'essieu principal 3 entrainé par le moteur 1 (ou d'un paramètre qui y est lié).

Le présent exposé vise à exploiter la transmission hydraulique d'assistance notamment afin de réaliser une aide au démarrage en cote, en plus des fonctions conventionnelles de la transmission d'assistance.

Le contrôleur 9 est ainsi configuré de manière à piloter la transmission hydraulique d'assistance en fonction de plusieurs paramètres : la vitesse du véhicule, la commande d'accélération et la commande de frein.

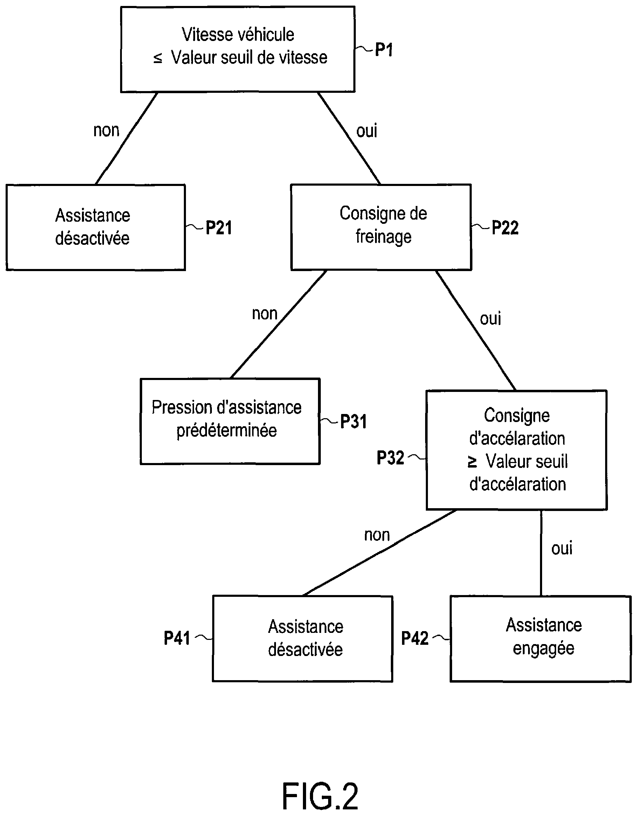

La figure 2 est un diagramme représentant schématiquement le fonctionnement décrit ci-après.

Un premier paramètre pris en compte est la vitesse du véhicule (étape P1). La transmission hydraulique d'assistance telle que considérée est une transmission hydraulique d'assistance du type « à basse vitesse ». Ainsi, le contrôleur 9 va automatiquement désengager la transmission hydraulique d'assistance dès lors que la vitesse du véhicule dépasse une valeur seuil de vitesse, par exemple en réalisant un « bypass » du moteur hydraulique 8, et/ou en conférant une cylindrée nulle à la pompe hydraulique 7 (étape P21). A titre d'exemple, la valeur seuil de vitesse est comprise entre 0 et 10km/h, typiquement égale à 5, 6 ou 7 km/h.

Dans le cas où la vitesse du véhicule est inférieure ou égale à ladite valeur seuil de vitesse, le contrôleur 9 détermine alors si une consigne de freinage est appliquée (étape P22), par exemple par l'actionnement d'un frein de service ou de parking du véhicule par l'utilisateur.

Dans le cas où aucune consigne de freinage n'est appliquée, le contrôleur 9 pilote la cylindrée de la pompe hydraulique 7 de manière à ce qu'elle délivre un débit en fonction de la vitesse de rotation du premier essieu 3, comme indiqué précédemment (étape P31).

Dans le cas où une consigne de freinage est appliquée, le contrôleur 9 va alors prendre en compte la consigne d'accélération appliquée (étape P32).

Si la consigne d'accélération est inférieure à une valeur seuil d'accélération, alors la transmission hydraulique d'assistance est désengagée (étape P41).

Si la consigne d'accélération est supérieure ou égale à la valeur seuil d'accélération, alors la transmission hydraulique d'assistance est engagée de manière à fournir un effort de traction au véhicule (étape P42). La valeur seuil d'accélération est typiquement égale à 10%.

Un tel fonctionnement se distingue des procédés de pilotage conventionnels dans lesquels l'application d'une consigne de freinage entraine nécessairement l'arrêt de la transmission d'assistance.

Par opposition, le procédé de commande tel que proposé vise à prendre en compte un paramètre additionnel, à savoir l'accélération du véhicule, afin de déterminer si la transmission hydraulique d'assistance doit être maintenue engagée ou non.

La consigne d'accélération appliquée au véhicule permet en effet de traduire une situation de démarrage en cote, situation dans laquelle la transmission hydraulique d'assistance peut ici être exploitée afin de fournir un effort de traction supplémentaire au véhicule et ainsi faciliter le démarrage en cote, en particulier d'aider au maintien du véhicule pendant que le conducteur fait la manœuvre de démarrage.

En effet, la situation particulière dans laquelle un utilisateur va appliquer simultanément une consigne de freinage et une consigne d'accélération est caractéristique d'une situation de démarrage en cote.

Selon un mode de réalisation particulier, lorsqu'une situation de démarrage en côte est détectée, le contrôleur peut alors piloter la transmission hydraulique d'assistance selon une consigne spécifique, par exemple de manière à délivrer un couple supérieur au couple délivré par la transmission hydraulique d'assistance à une vitesse équivalente mais pas dans une condition de démarrage en cote.

Le procédé de commande tel que présenté peut s'appliquer quel que soit le sens de déplacement du véhicule considéré, en marche avant ou en marche arrière.

Le contrôleur 9 peut également être associé à différents capteurs, notamment un capteur d'inclinaison du véhicule, ou un capteur de charge. Un capteur de charge est notamment avantageux dans le cas d'un véhicule destiné à transporter des charges importantes et/ou un attelage.

L'association de tels capteurs au contrôleur peut ainsi permettre de définir des conditions additionnelles pour la fonction d'assistance au démarrage en cote du véhicule via la transmission d'assistance, dans des conditions dans lesquelles le véhicule n'est pas en situation de patinage.

Ainsi, l'engagement de la transmission hydraulique d'assistance (étape P42) peut par exemple être soumis à des conditions additionnelles en termes de charge et/ou d'inclinaison du véhicule. Par exemple, la transmission hydraulique d'assistance peut n'être engagée que lorsque l'inclinaison du véhicule dépasse une valeur seuil d'inclinaison, ou lorsque la charge détectée par le capteur de charge est supérieure ou égale à une valeur seuil de charge.

L'engagement de la transmission hydraulique peut également être envisagé en marche avant ou en marche arrière.

En variante, les indications fournies par un capteur de pente ou de charge peuvent permettre de moduler l'effort de traction fourni par l'assistance ; l'effort de traction étant alors augmenté en fonction de la valeur de l'inclinaison et/ou de la valeur de la charge.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de commande d'un véhicule comprenant une transmission principale configurée pour entrainer en rotation un premier ensemble de roues, et une transmission hydraulique configurée pour entrainer en rotation un second ensemble de roues, le véhicule étant muni d'un frein, dans lequel
- en l'absence de consigne de freinage sur le frein, et lorsque la transmission hydraulique est activée, on pilote (P31) une pompe hydraulique (7) de la transmission hydraulique de manière à établir une pression prédéterminée au sein d'un circuit hydraulique de la transmission hydraulique,
ledit procédé étant **caractérisé en ce que** :
- en cas de consigne de freinage appliquée sur le frein, la transmission hydraulique est alors pilotée en fonction d'une consigne d'accélération appliquée au véhicule (P32) ;
si la consigne d'accélération est supérieure ou égale à une valeur seuil d'accélération, et que la vitesse de déplacement du véhicule est inférieure ou égale à une valeur seuil de vitesse, la transmission hydraulique est pilotée de manière à exercer un effort de traction (P42),
si la consigne d'accélération est inférieure à la première valeur seuil, la transmission hydraulique est désengagée (P41).

2. Procédé selon la revendication 1, dans lequel la transmission hydraulique est désengagée lorsque la vitesse du véhicule dépasse une valeur seuil de vitesse.

3. Procédé selon l'une des revendications 1 ou 2, dans lequel en cas de consigne de freinage appliquée sur le frein, la transmission hydraulique est également pilotée en fonction d'une indication de l'inclinaison du véhicule.

4. Procédé selon la revendication 3, dans lequel le pilotage de la transmission hydraulique de manière à exercer un effort de traction est modulé en fonction de l'inclinaison du véhicule

5. Procédé selon l'une des revendications 1 à 4, dans lequel en cas de consigne de freinage appliquée sur le frein, la transmission hydraulique est également pilotée en fonction d'une indication de charge du véhicule.

6. Procédé selon la revendication 5, dans lequel le pilotage de la transmission hydraulique de manière à exercer un effort de traction est modulé en fonction de la charge du véhicule

7. Véhicule comprenant un dispositif de transmission configuré pour être commandé selon le procédé de l'une quelconque des revendications 1 à 6.

## Patentansprüche

1. Verfahren zum Steuern eines Fahrzeugs, umfassend ein Hauptgetriebe, das dazu ausgelegt ist, einen ersten Satz von Rädern drehend anzutreiben, und ein Hydraulikgetriebe, das dazu ausgelegt ist, einen zweiten Satz von Rädern drehend anzutreiben, wobei das Fahrzeug mit einer Bremse ausgestattet ist,
bei dem
- wenn kein Bremssollwert an der Bremse vorliegt und wenn das Hydraulikgetriebe aktiviert ist, eine Hydraulikpumpe (7) des Hydraulikgetriebes derart gesteuert (P31) wird, dass ein vorbestimmter Druck innerhalb eines Hydraulikkreises des Hydraulikgetriebes hergestellt wird,
wobei das Verfahren **dadurch gekennzeichnet ist, dass**:
- im Falle eines an die Bremse angelegten Bremssollwertes das Hydraulikgetriebe dann in Abhängigkeit von einem an das Fahrzeug angelegten Beschleunigungssollwert gesteuert wird (P32),
wenn der Beschleunigungssollwert größer als ein oder gleich einem Beschleunigungsschwellwert ist und die Fortbewegungsgeschwindigkeit des Fahrzeugs kleiner als ein oder gleich einem Geschwindigkeitsschwellwert ist, das Hydraulikgetriebe derart gesteuert wird, dass es eine Zugkraft ausübt (P42),
wenn der Beschleunigungssollwert kleiner als der erste Schwellwert ist, das Hydraulikgetriebe außer Eingriff gebracht wird (P41).

2. Verfahren nach Anspruch 1, bei dem das Hydraulikgetriebe außer Eingriff gebracht wird, wenn die Geschwindigkeit des Fahrzeugs einen Geschwindigkeitsschwellwert überschreitet.

3. Verfahren nach einem der Ansprüche 1 oder 2, bei dem, falls ein Bremssollwert an die Bremse angelegt ist, das Hydraulikgetriebe auch in Abhängigkeit von einer Angabe der Neigung des Fahrzeugs gesteuert wird.

4. Verfahren nach Anspruch 3, bei dem die Steuerung des Hydraulikgetriebes, um eine Zugkraft auszuüben, in Abhängigkeit von der Neigung des Fahrzeugs moduliert wird.

5. Verfahren nach einem der Ansprüche 1 bis 4, bei dem, falls ein Bremssollwert an die Bremse angelegt ist, das Hydraulikgetriebe auch in Abhängigkeit von einer Angabe einer Last des Fahrzeugs gesteuert wird.

6. Verfahren nach Anspruch 5, bei dem die Steuerung des Hydraulikgetriebes, um eine Zugkraft auszuüben, in Abhängigkeit von der Last des Fahrzeugs moduliert wird.

7. Fahrzeug, das eine Übersetzungsvorrichtung umfasst, die dazu ausgelegt ist, nach dem Verfahren von einem der Ansprüche 1 bis 6 gesteuert zu werden.

## Claims

1. A method for controlling a vehicle comprising a main transmission configured to drive in rotation a first set of wheels, and a hydraulic transmission configured to drive in rotation a second set of wheels, the vehicle being provided with a brake,
wherein
- in the absence of braking setpoint on the brake, and when the hydraulic transmission is activated, a hydraulic pump (7) of the hydraulic transmission is piloted (P31) so as to establish a predetermined pressure within a hydraulic circuit of the hydraulic transmission, said method being **characterized in that**
- in case of braking setpoint applied to the brake, the hydraulic transmission is then piloted as a function of an acceleration setpoint applied to the vehicle (P32);
if the acceleration setpoint is greater than or equal to an acceleration threshold value, and the traveling speed of the vehicle is lower than or equal to a speed threshold value, the hydraulic transmission is piloted so as to exert a tractive force (P42),
if the acceleration setpoint is lower than the first threshold value, the hydraulic transmission is disengaged (P41).

2. The method according to claim 1, wherein the hydraulic transmission is disengaged when the speed of the vehicle exceeds a speed threshold value.

3. The method according to any of claims 1 or 2, wherein in case of braking setpoint applied to the brake, the hydraulic transmission is also piloted as a function of an indication of the inclination of the vehicle.

4. The method according to claim 3, wherein the piloting of the hydraulic transmission so as to exert a tractive force is modulated as a function of the inclination of the vehicle.

5. The method according to any of claims 1 to 4, wherein in case of braking setpoint applied to the brake, the hydraulic transmission is also piloted as a function of a load indication of the vehicle.

6. The method according to claim 5, wherein the piloting of the hydraulic transmission so as to exert a tractive force is modulated as a function of the load of the vehicle.

7. A vehicle comprising a transmission device configured to be controlled according to the method of any one of claims 1 to 6.
